# EUROPEAN PATENT APPLICATION

(11) **EP 4 186 671 A1**
(43) Date of publication of application: **31.05.2023**
(21) Application number: 21306666.5
(22) Date of filing: 30.11.2021
(51) Int. Cl.: B29C 43/00, D04H 1/558, D04H 1/4382, D04H 1/541, B29C 43/34, B29C 45/14, D04H 1/26, D04H 1/4291, D04H 1/544, D04H 1/55, B29K 223/00, B29K 267/00, B29K 23/00, B29K 105/12, B29K 311/14, B29L 31/30, B60R 13/02, B29C 45/00, D04H 1/485

(54) **METHOD FOR MANUFACTURING A TRIM ELEMENT AND ASSOCIATED TRIM ELEMENT**

(71) Applicant: Faurecia Intérieur Industrie, 92000 Nanterre (FR)
(72) Inventor: RODILLA GARDO, Jose Antonio, 46020 Valencia (ES); DE LA PUENTE-NUNEZ, Eusebio, 36900 Marin (PONTEVEDRA) (ES)
(74) Representative: Lavoix

(57) **Abstract**

The invention relates to a method for manufacturing a trim element of a vehicle comprising the steps of :
- blending (100) of a mixture comprising wood fibres, polypropylene (PP) fibres and polyethylene terephthalate (PET) fibres;
- needling (110) the mixture to obtain a mat;
- hot calibration (120) of the mat;
- shaping (130) of the calibrated mat into a trim part; and
- back-injection (140) of additional elements on the trim part to form the trim element.

The shaping and back-injection steps (130, 140) are performed in the same mould, the mould being at a temperature strictly below 70°C during the shaping step (130).

The invention further relates to a corresponding trim element.

## Description

The present invention relates to a method for manufacturing a trim element of a vehicle and to an associated trim element.

DE 102015224952 A1 describes a method for producing an injection-molded component comprising a thermoplastic fiber-plastic composite.

The thermoplastic fiber-plastic composite comprises a plastic matrix embedding a reinforcing fiber, which becomes more deformable when heated with increasing temperature, the method having at least the following steps: introducing the fiber-plastic composite into an injection molding tool; injection of the fiber-plastic composite with a plastic compound.

However, as the plastic is injected through the mat, this technique may require holes previously punched or cut-off from the mat, which results in an additional operation. Furthermore, this would leave a protruding or depression generated by the injection nozzle.

It is an objective of the invention to overcome these disadvantages.

For this purpose, the subject of the invention is a method for manufacturing a trim element of a vehicle, comprising the steps of :
- blending of a mixture comprising wood fibres, polypropylene (PP) fibres and polyethylene terephthalate (PET) fibres;
- needling the mixture to obtain a mat;
- hot calibration of the mat;
- shaping of the calibrated mat into a trim part; and
- back-injection of additional elements on the trim part to form the trim element,
the shaping and back-injection steps being performed in the same mould, the mould being at a temperature strictly below 70°C during the shaping step.

Thanks to the back injection technique, there is no need for a preparation step of punching or cutting-off holes in the mat. Further, the needling step allows entangling the fibres, adding moldability and tensile properties for subsequent moulding.

According to other features of the method according to the invention, considered alone or according to any technically possible combination:
- the calibration is done at a temperature above 160°C, preferably between 200°C and 220°C,
- the mould is at a temperature between 30°C and 50°C during the shaping step,
- the mixture comprises between 40% and 50% of wood fibres, between 40% and 50% of polypropylene fibres and between 10% and 15% of polyethylene terephthalate fibres,
- the method comprises adding a fleece on a side of the mixture before the needling step, in particular a non-woven PET fleece or a non-woven PET and PP fleece or a non-woven PP fleece,
- the mixture comprises at least one fungicide and/or diatomite and/or zeolite and/or paraffin,
- the PP fibres are treated with maleic anhydride,
- during the back-injection step, the trim part fills a moulding cavity of the mould only partly such as to define at least one empty portion, a product being injected directly inside the at least one empty portion, and/or
- during needling, the mixture being needled has two sides and is needled from both sides.

The invention further relates to a trim element manufactured according to a method of the previous type.

Other aspects and advantages of the invention will appear upon reading the following description, provided as an example, and done in reference to the appended drawings, in which:

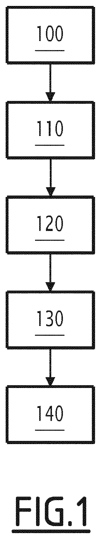

- figure 1 is a schematic bloc diagram of a process according to one embodiment of the invention, and
- figure 2 is a schematic view of a back-injection step of a process according to an embodiment of the invention.

A method for manufacturing a trim element of a vehicle is described hereafter. The method comprises the following steps:
- blending 100 of a mixture;
- needling 110 the mixture to obtain a mat;
- hot calibration 120 of the mat;
- shaping 130 of the calibrated mat into a trim part; and
- back-injection 140 of additional elements on the trim part to form the trim element.

The mixture comprising wood fibres, polypropylene (PP) fibres and polyethylene terephthalate (PET) fibres.

Using wood fibres enables a good air permeability and adhesion properties for subsequent gluing and covering processes with glue on the trim element.

The wood fibres have a length between 3 and 12 millimetres.

The PP fibres are destined to form a matrix in which the wood fibres are embedded. In one embodiment, the PP fibres are treated with maleic anhydride (MA).

This enables to obtain improved mechanical properties of the trim element. In particular, an increase in the bending elasticity module, in the maximum bending force and in the bending test is obtained.

The bending elasticity module corresponds to the resistance against elastically deformation. The maximum bending force corresponds to the bending force at which the material breaks. The bending test corresponds to the bending strength or the stress in the corresponding material just before it yields.

The treatment with maleic anhydride also improves the thickness swelling, in particular by limiting the humidity absorption.

The PET fibres have a length between 60 and 90 mm.

Using PET fibres increases the tensile properties, in particular with a higher tensile strength, and formability of the mat. This is particularly advantageous when the desired 3D mat shape is complex.

In one embodiment, the mixture comprises at least one fungicide and/or diatomite and/or zeolite and/or paraffin.

The fungicide enables a better ageing of the trim element, in particular regarding the impact of humidity on the ageing of the trim element.

Paraffin improves the water-resistance of the wood fibre based material and protect it from moisture.

Diatomite and/or zeolite help contain or reduce the emissions, in particular of volatile organic components, and help to prevent odors.

The effects of the treatment of the PP fibres with MA can be observed in the table below, wherein trim elements formed from different mixtures and manufactured according to the method of the invention were manufactured and tested.

| Treatment of PP fibre with MA | Fleece | Diatomite (%wt) | Fungicide (%wt) | Paraffin (%wt) | Elasticity module (N/mm²) | Bending test (N/mm²) | Max bending force (N) | Thickness swelling (%) |
|---|---|---|---|---|---|---|---|---|
| Yes | Without | 0 | 1 | 1 | 1876 | 94 | 248 | 6,10% |
| Yes | With | 3 | 1 | 1 | 2962 | 108 | 319 | 4,40% |
| Yes | With | 0 | 1 | 0 | 1926 | 94 | 258 | 3,60% |
| Yes | With | 0 | 0 | 1 | 1750 | 114 | 360 | 4,90% |
| Yes | Without | 3 | 1 | 0 | 2336 | 70 | 190 | 4,10% |
| Yes | Without | 0 | 0 | 0 | 1492 | 90 | 230 | 1,90% |
| Yes | Without | 3 | 0 | 1 | 2075 | 89 | 249 | 5,30% |
| Yes | With | 3 | 0 | 0 | 2263 | 90 | 237 | 4,90% |
| Yes | With | 3 | 0,25 | 0 | 1637 | 76 | 215 | 7,70% |
| No | With | 0 | 0 | 0 | 1538 | 56 | 156 | 4,50% |
| No | Without | 0 | 0 | 1 | 2284 | 62 | 172 | 3,70% |
| No | Without | 0 | 1 | 0 | 1192 | 63 | 158 | 9,00% |
| No | With | 3 | 0 | 1 | 1457 | 76 | 229 | 4,90% |
| No | With | 3 | 1 | 0 | 1301 | 79 | 222 | 10,30% |
| No | Without | 3 | 1 | 1 | 1148 | 79 | 228 | 8,30% |
| No | With | 0 | 1 | 1 | 1481 | 77 | 191 | 7,00% |
| No | Without | 3 | 0 | 0 | 1190 | 68 | 175 | 7,60% |
| No | With | 3 | 0,25 | 0 | 1385 | 78 | 213 | 8,20% |

The elasticity module, the bending test and the max bending force are measured according to the standard DIN EN 310

The thickness increase or swelling is mainly because of humidity absorption.

The thickness swelling is measured according to the standard DIN EN 322.

The above table shows on average for a trim element with PP fibres treated with MA a thickness swelling of 4,80%, an elasticity module of 2035 N/mm², a bending test of 92 N/mm² and a max bending force of 256 N, while on average for a trim element with PP fibres without treatment with MA a thickness swelling of 7,10%, an elasticity module of 1442 N/mm², a bending test of 71 N/mm² and a max bending force of 194 N.

The mixture for example comprises:
- between 40% and 50% of wood fibres,
- between 40% and 50% of polypropylene (PP) fibres, and
- between 10% and 15% of polyethylene terephthalate (PET) fibres.

The wood fibres reduces the ecological impact by increasing the bio-content of the mixture.

The PP fibres are a binder and allow joining all the fibres when melted.

The PET fibres increase formability and tensile properties.

The PP fibres are shorter than the PET fibres.

The above proportions enable reaching targeted properties of the end trim element.

The components of the mixture are blended until the components are evenly distributed.

Optionally, a fleece, in particular a non-woven PET fleece or a non-woven PET and PP fleece or a non-woven PP fleece, is added on a side of the mixture before the needling step.

Such a fleece is, for example, adapted for vehicle interior trim components integrating fixing features and/or ribs like door panel carrier, center console carrier or dashboard structural part.

Said fleece increases the tensile property and facilitate the transport, in particular to the needling machine as described below.

The mixture is placed in a needling machine, if applicable with the fleece.

When applicable, the fleece is located on the bottom side of the mixture, in order to be needled with it.

The needling machine comprises needles.

The needles have, for example, a harpoon shape.

The needling machine further comprises two plates that extend parallel to each other, opposite one another.

The two plates are spaced apart, the mixture being fed between the two plates, for example with a feeder conveyor.

Each plate is provided with perforations for the passage of the needles through the plate.

The mixture in the needling machine has two sides, more particularly one side extending against each plate.

The mixture is needled or also called needle-punched.

Needle-punching enables mechanically entangling the fibres of the mixture to produce a non-woven fabric by repeated penetration of the needles, particularly on all the width of the mat.

When applicable, the fleece is needled with the mixture.

In the present embodiment, the mixture is needled from both sides

Alternatively, the mixture is needle from only one side.

The process, for example, comprises two consecutive needling steps in two different machines between the blending step and the hot-shaping step.

This increases the formability and the tensile property of the mat, such that it will be better molded and offer a better resistance to tear.

Thus, needling enable having a higher quality mat.

Further, needling is also advantageous for the back-injection step that will be later described, as it increases homogeneity, with correct density, and limit the material leaking on the other side of the mat compared to the back-injection.

Needling from both sides particularly improve tensile properties of the mat, in particular regarding elongation and force.

The needled mixture, with the fleece if applicable, forms a mat.

The mat has a thickness between 8 mm and 14 mm.

The mat has a mass per unit area or surface density between 1000 g/m² and 2000 g/m².

This enables satisfactory surface quality results.

These parameters are targeted for improved mechanical properties of the trim element.

Optionally, between the needling step 110 and the hot calibration step 120, the process comprises a step of cutting the mat to a size specified by product design of the final trim element.

The mat is then calibrated at a temperature of calibration.

More precisely, the calibration is done at a temperature above 160°C, advantageously between 200°C and 220°C.

This enables to melt the polypropylene fibres, such that the fibres form a matrix of the mixture.

Further, the calibration step 120 compresses the mat and reduces its thickness and helps approach the targeted properties such as the volumetric density.

The mat is then transferred into a mould 10 having a moulding cavity 20.

The mat is very soft after the calibration step, as it is still hot, for example at a temperature above 200°C.

There is a limited time between the end of the calibration step and the closing of the mould, such as to start the shaping step.

The limited time is comprised between 8 and 20 seconds.

Thus, the mat does not have time to cool down in temperature.

The mould 10 further includes at least one injection nozzle 30 , preferably a plurality of injection nozzles, for injecting a product inside the moulding cavity.

The mould 10 is movable between an open configuration, wherein the moulding cavity is accessible, and a closed configuration.

The mat is placed more specifically in the moulding cavity while the mould 10 is in the open configuration.

The mat is thermo-shaped in the mould 10.

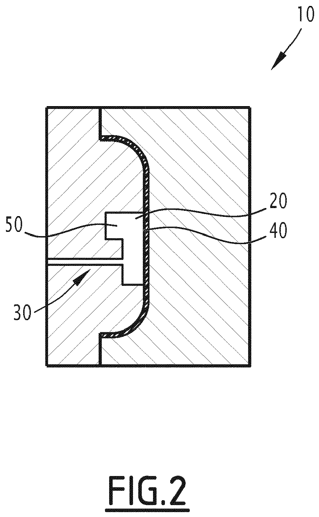

More precisely, the mould 10 is moved in the closed configuration, such that the mat is pressed to produce a trim part 40, as represented in figure 2.

The thickness of the mat is further reduced by said shaping step 130.

During shaping, the mould 10 is at a temperature strictly below 70°C, more particularly between 30°C and 50°C.

The mould 10 is maintained at said temperature during the shaping. The mould 10, for example, comprises a cooling circuit to dissipate the heat provided by the hotter mat.

The mat arrives in the mould at higher temperature, such as 160°C to 220°C, as it was heated during the calibration step.

After shaping, the trim part 40 has a thickness comprised between 1,4 and 2,4 mm.

The trim part 40 has a volumetric density between 0,85 g/cm³ and 0,95 g/cm³.

The trim part 40 has a mass per unit area or surface density between 1000 g/m² and 2000 g/m².

These parameters are targeted for improved mechanical properties of the trim element.

The trim part fills the moulding cavity 20 only partly.

At least a portion 50 of the moulding cavity 20 is thus empty.

In the represented embodiment, the empty portion(s) 50 has different local thicknesses, for example a first thinner portion for a rib to be injected and a second thicker portion for a retainer or fixing element to be injected.

The injection nozzle 30 is arranged such that the product injected through the injection nozzle(s) 30 is injected inside said empty portion(s) 50 of the moulding cavity 20.

The back-injection step 140 is performed in the same mould 10 as the shaping step 130.

The mould 10 remains in the closed configuration.

A product is injected into the empty portion(s) 50 of the moulding cavity 20, in particular via the injection nozzle(s) 30.

The product comprises, for example, polymer; for example polypropylene (PP), for example reinforced with glass fibres, in particular with 20 to 30 percentage in mass of glass fibres.

Here, the product is made of polymer; for example polypropylene (PP), for example reinforced with glass fibres, in particular with 20 to 30 percentage in mass of glass fibres.

Additional elements are thus added on the trim part to form the trim element by back-injection.

The additional elements correspond to the back-injected product in the empty portion(s) of the moulding cavity.

Thus, the injected product does not go through the mat as it is directly injected in the empty portion(s) of the moulding cavity.

The injection temperature depends on the product used and its melt flow index.

The back-injected product is injected for example at a temperature higher than 200°C, for example from 210°C to 250°C.

The mould 10 is still substantially at the shaping temperature.

The back-injection starts less than 30 seconds, more precisely less than ten seconds, more precisely between 4 and 8 seconds, preferably around 6 seconds, after the closing of the mould.

The invention further relates to a trim element manufactured according to the method previously described.

The use of one mould for the shaping and the back-injection simplifies the method in terms of needed tools and necessary time on the manufacturing line. This reduces the cost for producing said element.

## Claims

1. Method for manufacturing a trim element of a vehicle comprising the steps of :
- blending (100) of a mixture comprising wood fibres, polypropylene (PP) fibres and polyethylene terephthalate (PET) fibres;
- needling (110) the mixture to obtain a mat;
- hot calibration (120) of the mat;
- shaping (130) of the calibrated mat into a trim part (40); and
- back-injection (140) of additional elements on the trim part (40) to form the trim element,
the shaping and back-injection steps (130, 140) being performed in the same mould (10), the mould (10) being at a temperature strictly below 70°C during the shaping step (130).

2. Method according to claim 1, wherein the hot calibration (120) is done at a temperature above 160°C, preferably between 200°C and 220°C.

3. Method according to claim 1 or 2, wherein the mould (10) is at a temperature between 30°C and 50°C during the shaping step (130).

4. Method according to any of claims 1 to 3, wherein the mixture comprises between 40% and 50% of wood fibres, between 40% and 50% of polypropylene fibres and between 10% and 15% of polyethylene terephthalate fibres.

5. Method according to any of claims 1 to 4, comprising adding a fleece on a side of the mixture before the needling step (110), in particular a non-woven PET fleece or a non-woven PET and PP fleece or a non-woven PP fleece.

6. Method according to any of claims 1 to 5, wherein the mixture comprises at least one fungicide and/or diatomite and/or zeolite and/or paraffin.

7. Method according to any of claims 1 to 6, wherein the PP fibres are treated with maleic anhydride.

8. Method according to any of claims 1 to 7, wherein, during the back-injection step (140), the trim part (40) fills a moulding cavity (20) of the mould (10) only partly such as to define at least one empty portion (50) of the moulding cavity (20), a product being injected directly inside the at least one empty portion (50).

9. Method according to any of claims 1 to 8, wherein, during needling (110), the mixture being needled has two sides and is needled from both sides.

10. Trim element manufactured according to the method according to any of claims 1 to 9.
